(19) **Europäisches Patentamt / European Patent Office / Office européen des brevets**

(11) **EP 1 469 193 B1**

(12) **EUROPEAN PATENT SPECIFICATION**

(45) Date of publication and mention
of the grant of the patent:
**13.02.2008 Bulletin 2008/07**

(21) Application number: **02806578.7**

(22) Date of filing: **24.12.2002**

(51) Int Cl.:
*F02M 61/18* (2006.01)      *F02M 61/14* (2006.01)

(86) International application number:
**PCT/JP2002/013423**

(87) International publication number:
**WO 2003/062631 (31.07.2003 Gazette 2003/31)**

(54) **FUEL INJECTION VALVE FOR DIESEL ENGINE**

KRAFTSTOFFEINSPRITZVENTIL FÜR DIESELMOTOR

SOUPAPE D'INJECTION DE CARBURANT POUR MOTEUR DIESEL

(84) Designated Contracting States:
**DE DK FI GB**

(30) Priority: **24.01.2002   JP 2002015478**

(43) Date of publication of application:
**20.10.2004   Bulletin 2004/43**

(73) Proprietor: **Yanmar Co., Ltd.**
**Osaka-shi, Osaka 530-0013 (JP)**

(72) Inventors:
- **TSUJIMOTO, Keiichi**
**Osaka-shi, Osaka 530-0013 (JP)**
- **HAMAOKA, Shunji**
**Osaka-shi, Osaka 530-0013 (JP)**
- **OKADA, Shusuke**
**Osaka-shi, Osaka 530-0013 (JP)**

(74) Representative: **Pluckrose, Anthony William et al**
**BOULT WADE TENNANT**
**Verulam Gardens**
**70 Gray's Inn Road**
**London WC1X 8BT (GB)**

(56) References cited:
WO-A-00/20735          DE-A- 4 136 851
DE-A- 19 958 126       JP-A- 5 106 442
JP-A- 56 072 254       JP-A- 2001 165 017
JP-A- 2001 227 346     JP-U- 54 106 419
US-A- 5 667 145

- **PATENT ABSTRACTS OF JAPAN vol. 0174, no. 65 (M-1468), 25 August 1993 (1993-08-25) & JP 5 106442 A (YANMAR DIESEL ENGINE CO LTD), 27 April 1993 (1993-04-27)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

Technical Field

The present invention relates to a fuel injection valve of a diesel engine in which a shallow dish type combustion chamber is formed by a top face of a piston thereof.

Background Art

In a conventional diesel engine in which a shallow dish type combustion chamber is formed by a top face of a piston thereof, a method of enlarging a diameter of a nozzle hole for injecting fuel thereinto has been generally adopted, in order to reduce the fuel consumption. If the diameter of the nozzle hole is enlarged, the atomization of the fuel spray is deteriorated and the color of the exhaust gas is worsened.

As its countermeasure, it is conceivable to make the nozzle hole diameter smaller and to increase the number of the nozzle holes. With the structure, however, the distance between the nozzle holes becomes smaller, and the fuel sprays tend to cross (or overlap) one another. As a result, the amount of air to be introduced thereinto becomes short. If the pressure of the air supply is heightened to compensate the shortage of the air amount, the gas pressure inside the cylinder is increased. As a result, the amount of NOx generated therein increases. If the timing of injecting the fuel is delayed in order to avoid the increase of the NO:,, the worsening of color of the exhaust gas is incurred, as a result.

Document WO 00/20735 describes a combustion system for direct injection diesel engines. The combustions system includes a deep dish combustion chamber, and a fuel injection nozzle provided with upper and lower rows of nozzle holes. A ratio of total area of all the nozzle holes of the lower row to that of all the nozzle holes in the upper and lower rows being set to 0.25 - 0.35.

Disclosure of Invention

(Technical Object to Be Achieved by Invention)

The technical object to be achieved by the present invention is to provide a fuel injection valve of a diesel engine where a shallow dish type combustion chamber is formed by a top face of a piston thereof, in which the increase of NO> generated therein is restrained, and in which the fuel consumption is improved without worsening the color of the exhaust gas.

(Means to Achieve the Technical Object)

In order to achieve the technical object, in a diesel engine having a combustion chamber which is in a form of a shallow dish on a top face of a piston, the fuel injection valve comprising: a plurality of first nozzle holes provided on a same circumference of a part, of the fuel injection valve, projecting toward the combustion chamber; and a plurality of second nozzle holes provided on a circular side wall, of the fuel injection valve, opposite to a tip part of the fuel injection valve with respect to the first nozzle holes, in which each of the second nozzle holes has a diameter smaller than a diameter of each of the first nozzle holes, wherein the first nozzle holes and the second nozzle holes are arranged in a staggered form so that fuel sprays injected from the first nozzle holes and fuel sprays injected from the second nozzle holes do not cross one another in the combustion chamber.

According to the invention defined in claim 2, in the invention defined in claim 1, a top clearance for allowing a valve recess not to be formed and a bore diameter of the combustion chamber on the top face of the piston are set such that the fuel sprays injected from the second nozzle holes collide against an opening part of the combustion chamber on the top face of the piston when the piston is positioned near a top dead center.

According to the invention defined in claim 3, in the invention defined in claim 1 or 2, the number of the first nozzle holes is larger than the number of the second nozzle holes.

According to the invention defined in claim 4, in the invention defined in claim 1, a fuel valve nozzle hole angle of each of the second nozzle holes is set such that the fuel sprays injected from the second nozzle holes are diffused in a top clearance part after the fuel sprays collide against the piston.

According to the invention defined in claim 5, in the invention defined in claim 1, a nozzle hole angle of each of the first nozzle holes is set such that the fuel sprays injected from the first nozzle holes collide against a bottom surface of the combustion chamber and such that the fuel sprays injected therefrom do not adhere to the bottom surface thereof.

According to the invention defined in claim 6, in the invention defined in claim 1, the first nozzle holes are equally spaced on the same circumference of the fuel injection valve, and the second nozzle holes are equally spaced on a same circumference of the fuel injection valve.

According to the invention defined in claim 7, in the invention defined in claim 1, the first nozzle holes and the second nozzle holes are provided such that an intersecting point at which a center axis of the fuel injection valve and a centerline of a fuel spray injected from each of the first nozzle holes intersect to each other, does not coincide with an intersecting point at which the center axis of the fuel injection valve and a centerline of a fuel spray injected from each of the second nozzle holes intersect to each other, in order to prevent the fuel sprays injected from the first nozzle holes and the fuel sprays injected from the second nozzle holes, from crossing one another.

(Effect More Advantageous Than Prior Art)

According to the invention defined in claim 1, in a diesel engine having a combustion chamber which is in a form of a shallow dish on a top face of a piston 14, the fuel injection valve 1 is provided with a lower nozzle hole 2 (a first nozzle hole) and an upper nozzle hole 3 (a second nozzle hole), the diameter of the upper nozzle hole 3 is set to be smaller than that of the lower nozzle hole 2, and the lower nozzle holes 2 and the upper nozzle holes 3 are arranged in a staggered form. Therefore, the fuel spray(s) 13 injected from the lower nozzle hole 2 and the fuel spray(s) 12 injected from the upper nozzle hole 3 do not cross (or overlap) one another. As a result, it is possible to form an air-fuel mixture gas with a uniform density inside the combustion chamber 16. Thereby, a uniform combustion is made therein, and the fuel consumption is reduced while the discharge of $NO_X$ is suppressed.

According to the invention defined in claim 2, a top clearance (i.e. gap "X") is ensured. Thereby, an upper space inside the combustion chamber 36 can be employed effectually, and therefore the fuel consumption is reduced while the color of the exhaust gas is maintained in a good condition. Because the top clearance (i.e. gap "X") is secured beforehand, the increase in thermal loading of the piston 29 is prevented.

If the compression ratio is increased in order to increase the thermal efficiency thereof, the top clearance becomes smaller. As a result, there is a possibility that the opened exhaust valve and the piston may collide against each other. However, according to the invention defined in claim 2, the top clearance (i.e. gap "X") enough to make the valve recess unnecessary is secured. Therefore, the opened valve 26 (as well as the air intake valve 25 at time of overlap) can avoid a collision against the piston 29, while the fuel consumption is reduced and the exhaust color is kept in a good condition.

According to the invention defined in claim 3, the number of the lower nozzle holes 2 (21) (i.e. first nozzle holes) is larger than the number of the upper nozzle holes 3 (22) (i.e. second nozzle holes). Thereby, the fuel spray(s) 13 (27) injected therein from the lower nozzle hole 2 (21) and the fuel spray(s) 12 (28) injected therein from the upper nozzle hole 3 (22), do not cross (or overlap) one another, and the lower sprays are collided therewith and diffused without adhering (or sticking) to the side wall of the combustion chamber. Therefore, the fuel can be mixed up with air uniformly, the fuel can combust uniformly therein, and the exhaust color is kept in a good condition.

According to the invention defined in claim 4, the fuel sprays 28 at high temperature injected from the upper nozzle holes 22 are diffused in the top clearance part after the fuel sprays collide against the piston 29. Thereby, the thermal loading of the cylinder head 33 and the cylinder liner 31 are reduced, thus enhancing the reliability thereof.

According to the invention defined in claim 5, the fuel valve nozzle hole angle $r_5$ of each of the lower nozzle holes 21 is set such that the fuel sprays 27 injected from the lower nozzle holes 21 collide against a bottom surface of the combustion chamber 36, such that the fuel sprays 27 injected therefrom do not adhere to the bottom surface thereof, and such that the fuel spray 27 can be diffused smoothly therein. Thereby, the color of the exhaust gas is kept in good condition, particularly at time of no-load operation with respect to all the regions of operation.

According to the invention defined in claim 6, the upper nozzle holes 2 and the lower nozzle holes 3 are, respectively, provided at regular intervals (or even intervals) on the circumferences of the fuel injection valve 1. Thereby, the overlap (or crossing) of the fuel sprays to one another, is avoided, thus preventing the deterioration of the exhaust color.

According to the invention defined in claim 7, the fuel injection valve 1 is provided with the lower nozzle holes 2 and the upper nozzle holes 3 such that an intersecting point at which a center axis 11 of the fuel injection valve 1 and a centerline 5 of a fuel spray 13 injected from each of the lower nozzle holes 2 intersect to each other, does not coincide with an intersecting point at which the center axis 11 of the fuel injection valve 1 and a centerline 4 of a fuel spray 12 injected from each of the upper nozzle holes 3 intersect to each other. Thereby, the fuel spray 12 and the fuel spray 13 do no cross (or overlap) one another, and the color of the exhaust gas is kept in good condition. Also, it is easy to secure an interval (or gap) between the lower nozzle hole 2 and the upper nozzle hole 3, and it is possible to secure a respective wall thickness therebetween. Thereby, the reliability of the intensity of the fuel injection valve 1 can be gained.

Brief Description of Drawings

FIG. 1 is a diagrammatic cross-sectional view of a fuel injection valve of a diesel engine into which the invention defined in claim 1 is embodied.

FIG. 2 is a vertically cross-sectional front view showing a state in which a valve body of the fuel injection valve of the diesel engine of FIG. 1, contacts a valve seat.

FIG. 3 is a diagrammatically cross-sectional view of the fuel injection valve of the diesel engine into which the invention defined in claim 2 is embodied.

FIG. 4 is an enlarged view of the fuel injection valve.

FIG. 5 is a diagrammatic bottom view of the fuel injection valve.

FIG. 6 is a graph showing a relation between fuel consumption rate and amount of $NO_X$ emission, in each of the diesel engines according to the present invention and prior art.

FIG. 7 is a graph showing a relation between fuel valve nozzle hole angle of a lower nozzle hole and the color of the exhaust gas.

FIG. 8 is a graph showing a relation between a sum of areas of the lower nozzle holes with respect to the total area of nozzle holes and the color of the exhaust gas, and a relation between the sum thereof and the fuel consumption.

Best Mode for Carrying Out the Invention

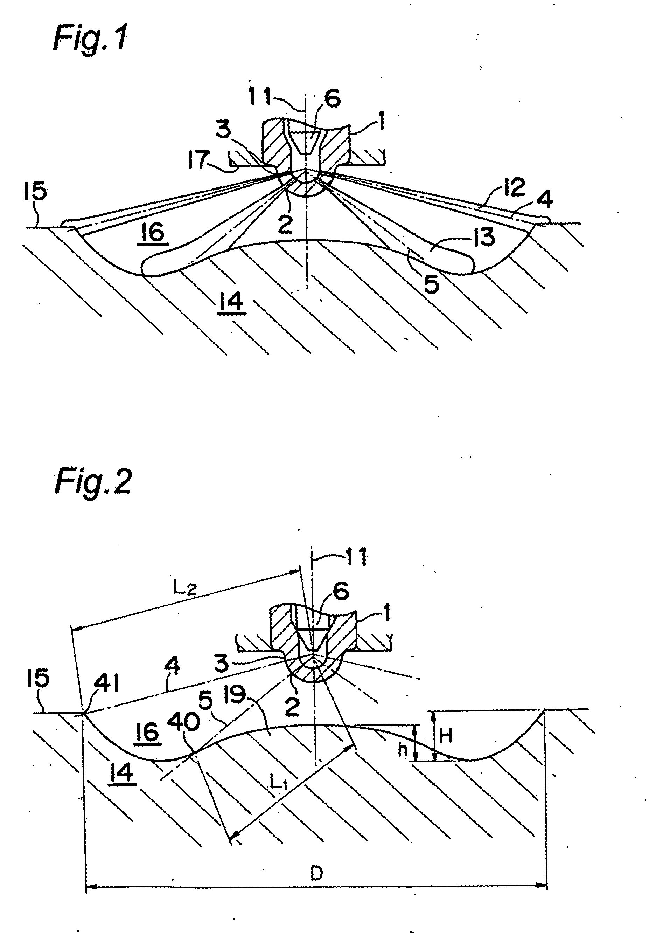

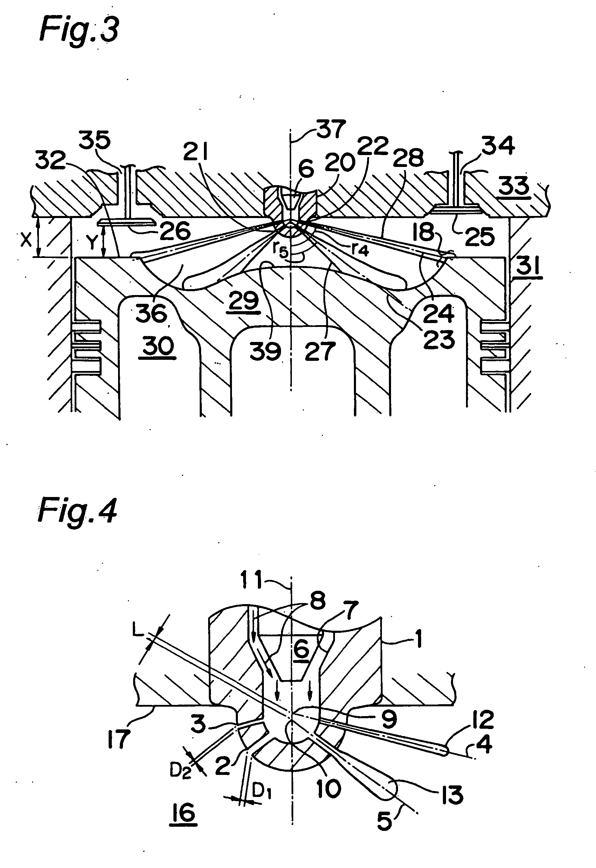

FIG. 1 is a vertically cross-sectional front view of a fuel injection valve 1 of a diesel engine into which the invention defined in claim 1 is embodied, and FIG. 4 is an enlarged view of the fuel injection valve 1. As shown in FIG. 1, the fuel injection valve 1 is mounted on a cylinder head 17, where the fuel injection valve 1 has a tip part which projects into a combustion chamber 16, in which the tip part has a plurality of lower nozzle holes 2 (i.e. first nozzle holes) and a plurality of upper nozzle holes 3 (i.e. second nozzle holes).

Inside a cavity of the fuel injection valve 1, there is provided a valve body 6. The valve body 6 can move up and down in a reciprocating manner inside the cavity thereof, by an unshown drive means such as a lift mechanism making use of its fuel pressure, an electromagnetic valve, etc. Also, as shown in FIG. 4, fuel 8 is supplied into the cavity of the fuel injection valve 1, with a pressure. When the valve body 6 moves away from a valve seat 7 formed in the fuel injection valve 1, the fuel is injected into the combustion chamber 16 through the lower nozzle holes 2 and the upper nozzle holes 3; and when the valve body 6 contacts with the valve seat 7, the injection of the fuel is stopped. Each of FIGS. 1 and 4 shows a state in which the valve body 6 is away from the valve seat 7.

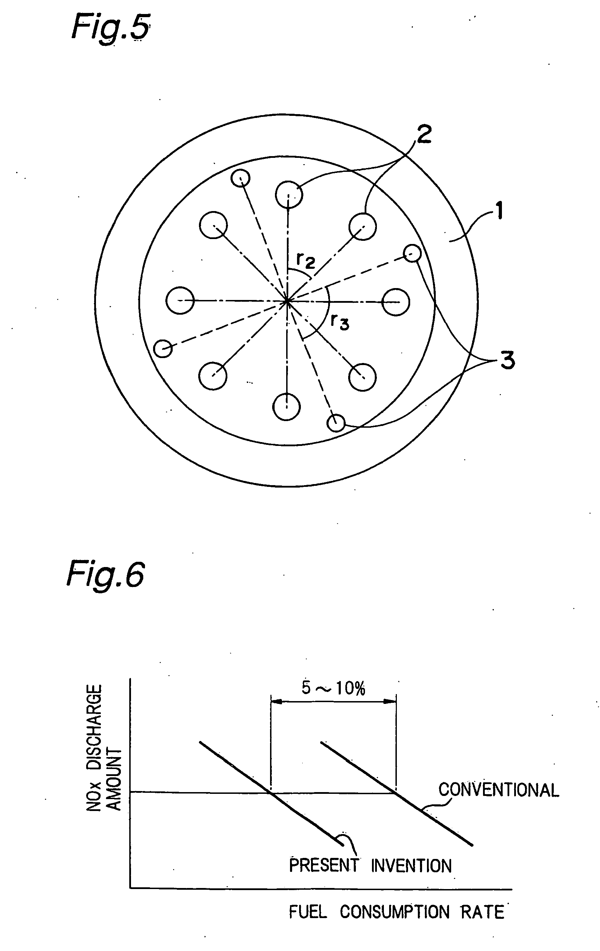

FIG. 5 is a diagrammatic bottom view of the fuel injection valve 1. As shown in FIG. 5, in respect of the lower nozzle holes 2, eight lower nozzle holes 2 are equally spaced on the same circumference of a circle locating in vicinity of a lower tip of the fuel injection valve 1 (i.e. in vicinity of a tip thereof on the side of the combustion chamber 16), at an angle of $R_2$ ($R_2$=45°).

Also, in respect of the upper nozzle holes 3, four upper nozzle holes 3 are equally spaced above the lower nozzle holes 2 (i.e. on the side of the cylinder head), at an angle of $R_3$ ($R_3$=90°). As shown in FIG. 5, the upper nozzle hole 3 is arranged at a middle between two adjacent lower nozzle holes 2. Also, as shown in FIG. 5, the bore diameter of the upper nozzle hole 3 is set to be smaller than that of the lower nozzle hole 2.

By the way, FIG. 1 (as well as FIG. 2 explained later) shows the lower nozzle holes 2 and the upper nozzle holes 3 in the same cross -section. This is, however, for convenience sake in the explanation of a positional relation between the lower nozzle holes 2 and the upper nozzle holes 3.

As shown in FIG. 1, a shallow dish type combustion chamber (i.e. a concave) is formed by a top surface (or a top face), of a piston 14, opposing a lower surface of the cylinder head 17. FIG. 2 is a vertically cross-sectional front view of the fuel injection valve 1 of the diesel engine, showing a state in which the valve body 6 of the fuel injection valve 1 contacts with the valve seat 7. The shallow dish type combustion chamber is defined as a combustion chamber (i.e. a concave), the depth (H) of which is about 10% of the diameter (D) of the combustion chamber 16. Particularly, according to the shallow dish type combustion chamber of the present invention, there is provided an elevation part 19 on a central part of the concave, as shown in FIG. 2.

The height (h) of the elevation part 19 is slightly smaller than the depth (H) of the combustion chamber 16. If these are shown in relation to the diameter (D) of the combustion chamber, for example, H/D=0.11 and h/D=0.10.

As shown in FIG. 4, an intersecting point 10 (or an extension center) at which a fuel spray centerline 5 of the lower nozzle hole 2 and a center axis 11 of the fuel injection valve 1 intersect to each other, and an intersecting point 9 (or an extension center) at which a fuel spray centerline 4 of the upper nozzle hole 3 and the center axis 11 of the fuel injection valve 1 intersect to each other, are set to separate from each other by an interval "L".

Provided that the distance from an intersecting point 40 at which the fuel spray centerline 5 and a top face 15 intersect to each other, to the intersecting point 10, is $L_1$, and provided that the diameter of the lower nozzle hole 2 is $D_1$, then $L_1$ and $D_1$ satisfy the following equation (1):

$$L_1/D_1 = 150 \sim 250 \ \text{(i.e. from 150 to 250)} \tag{1}$$

Also, provided that the distance from an intersecting point 41 at which the fuel spray centerline 4 and the top face 15 intersect to each other, to the intersecting point 9, is $L_2$, and provided that the diameter of the upper nozzle hole 3 is $D_2$, then $L_2$ and $D_2$ satisfy the following equation (2):

$$L_2/D_2 = 300 \sim 400 \ \text{(i.e. from 300 to 400)} \tag{2}$$

When the piston 14 moves upward and its compression stroke starts, and when the piston 14 is positioned near its TDC (Top Dead Center) shown in FIG. 1, the valve body 6 is moved away from the valve seat 7 by an unshown drive means. Then, the fuel 8 (FIG. 4) is injected into the combustion chamber 16, as fuel spray 13, from the lower nozzle holes 2; and the fuel 8 is injected into the combustion chamber 16, as fuel spray 12, from the upper nozzle holes 3.

The fuel spray 13 is diffused smoothly along the top face of the elevation part 19 of the piston 14. Also, the fuel sprays 12 and 13 do not cross (or overlap) one another in the combustion chamber 16. Therefore, a thicker region of fuel is not formed inside the combustion chamber 16, and the fuel combusts in a good condition.

FIG. 3 is a diagrammatically cross-sectional view of the fuel injection valve 20 of the diesel engine into which the invention defined in claim 2 is embodied. The piston 29 shown in FIG. 3 is in the TDC, where a top clearance is set as a gap (or interval) "X".

The cylinder head 33 is provided with an air intake passage 34 and an exhaust passage 35. The air intake passage 34 has an air intake valve 25, and the exhaust passage 35 has an exhaust valve 26. When the air intake valve 25 is opened, air (or compressed air which is supplied by an unshown supercharger) is supplied to the combustion chamber 36 through the air intake passage 34. Meanwhile, when the exhaust valve 26 is opened, combustion gas (or exhaust gas) in the combustion chamber 36 is discharged through the exhaust passage 35. In FIG. 3, for convenience sake in explanation, the air intake valve 25 and the exhaust valve 26 are shown in the same cross section. Although FIG. 3 shows a state in which the exhaust valve 26 is opened and the fuel is being injected therein, this is also for convenience sake in explanation of a gap (or interval) "Y" which is described later.

If the top clearance "X" is not secured fully, when the exhaust valve 26 (as well as the air intake valve 25) at time of overlap is opened, there is a possibility that the exhaust valve 26 may collide with the top face (or top surface) of the piston 29. In order to avoid the collision of the exhaust valve 26 and the top face thereof with each other, the conventional piston has been provided with a valve recess. In case that the piston 29 is provided with the valve recess, however, the upper limit of an oil gallery 30 for cooling down the top face 32 at high temperature is restricted, and the wall thickness of part other than that of the valve recess becomes larger. As a result, the cooling capability of the top face 32 is deteriorated, and the thermal loading of the top face 32 is increased.

Meanwhile, according to the invention defined in claim 2, the gap "X" is secured as the top clearance. Namely, the gap "Y" is ensured between the exhaust valve 26 (as well as the air intake valve 25) which is opened and the top face 32 of the piston 29, and therefore there is no possibility that both of them collide with each other. Consequently, there is no need of provision of the valve recess. With the construction, the oil gallery 30 can be provided so as to realize a better cooling capability of the top face 32, thereby decreasing the thermal loading of the top face 32 effectively.

The construction of the fuel injection valve 20 is almost the same as that of the fuel injection valve 1 shown in FIG. 1. The fuel spray 27 is injected therein from the lower nozzle hole 21 along a fuel spray centerline 23 as a center, and the fuel spray 28 is injected therein from the upper nozzle hole 22 along a fuel spray centerline 24 as a center. The fuel spray 27 is diffused smoothly along the top face of an elevation part 39 of the piston 29.

The fuel sprays 27 and 28 do not mix one another inside the combustion chamber 36. The fuel spray centerline 24 is set to be within an open part 18 of the shallow dish type combustion chamber (i.e. concave) which is formed on the top face 32 of the piston 29 at the TDC position. Here, the angle formed between the centerline 37 of the fuel injection valve 20 and the fuel spray centerline 24 is defined as a fuel valve nozzle hole angle $r_4$, and the angle formed between the centerline 37 thereof and the fuel spray centerline 23 is defined as a fuel valve nozzle hole angle $r_5$.

The fuel valve nozzle hole angle $r_4$ is set so that the fuel spray centerline 24 is within the open part 18. Thereby, before the fuel spray at high temperature reaches the piston 29, the fuel spray is prevented from reaching a lower surface of the cylinder head 33 directly, or from reaching an inner wall surface of a cylinder liner 31 directly. As a result, the increase in temperature of the cylinder head 33 and the cylinder liner 31 is restricted. Accordingly, the reliability of the cylinder head 33 and the cylinder liner 31 is enhanced, and it is possible to maintain the diesel engine in good condition. On the other hand, the top face 32 of the piston 29 which the fuel spray at high temperature reaches, is properly cooled down by oil inside the oil gallery 30.

Also, the fuel valve nozzle hole angle $r_5$ is set so that the fuel spray 27 injected from the lower nozzle hole 21 is diffused smoothly along the bottom surface of the combustion chamber 36 (i.e. along the bottom surface of the piston 29 forming the shallow dish type combustion chamber), and so that the fuel sprays 27 and 28 do not cross one another.

The fuel valve nozzle hole angle $r_5$ is varied in view of the depth "H" of the combustion chamber and the top clearance. However, if the fuel valve nozzle hole angle $r_5$ is set so that the diameter $D_2$ of the nozzle hole and the interval $L_2$ satisfy the aforementioned equation (2), it is possible to prevent the fuel spray 27 from colliding with the bottom surface of the combustion chamber 36 and from sticking (or adhering) thereto. Also, with the angle $r_5$, it is possible to make the fuel spray 27 diffuse smoothly by collision against the bottom surface of the combustion chamber 36.

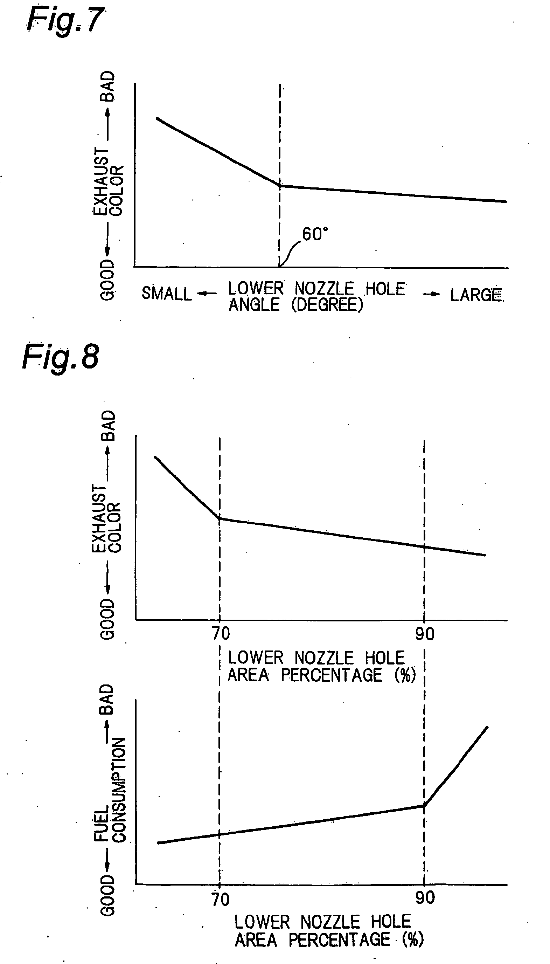

By satisfying the aforementioned equations (1) and (2), and by setting the fuel valve nozzle hole angle $r_5$ of the lower nozzle hole 21 to be equal to or less than 60°, the color of the exhaust gas is maintained in good condition, as shown in FIG. 7.

If showing the settings of the lower nozzle hole 21 (2) and the upper nozzle hole 22(3) as one example, it would be as follows. Namely, if the bore diameter of the lower nozzle hole 21 is set to be 0.25-0.40mm and the fuel valve nozzle hole angle $r_5$ is set to be 60-70° , the bore diameter of the upper nozzle hole 22 can be 0.10-0.25mm and the fuel valve nozzle hole angle $r_4$ can be approximately 75-85° , where the ratio of the number of the upper nozzle holes to the number of the lower nozzle holes is equal to 1/2.

In case that the valve recess is provided therein, it is almost impossible to make the thickness of the upper circumferential part of the piston 29 uniform, thus difficult to cool down the part thereof evenly. Therefore, in contrast with a case in which the valve recess is not provided therein, the bias of thermal loading is easy to occur, and the intensity of the piston is decreased owning to its high temperature. But, if the top clearance (i.e. gap "X") is secured originally, there is no need of providing the valve recess. Therefore, the bias of thermal loading of the piston 29 does not occur, and therefore it is possible to constitute the piston 29 which has a high reliability and is stable in intensity.

If the number of the upper nozzle holes 22 (3) is set to be smaller than that of the lower nozzle holes 21 (2), as shown in FIG. 5, where both of them are arranged in a staggered form (in an imperfect staggered form), the fuel sprays tend not to cross (or overlap) one another, and it is desirable. However, as far as the fuel sprays are evenly (or uniformly) mixed with air and a uniform combustion of the fuel sprays therein is realized while the fuel sprays 12, 13 (FIG. 1) or 27, 28 (FIG. 3) do not cross each other, it is possible to make the number of the upper nozzle holes equal to that of the lower nozzle holes, and to make both of them be arranged in a perfect staggered form.

According to the present invention (invention defined in each of claims 1-7), by setting the upper nozzle holes 22 (3) and the lower nozzle holes 21 (2) as explained above, it is possible to reduce the amount of fuel consumption by 5-10% while the amount of generated $NO_X$ included in the exhaust gas is kept constant, in comparison with the conventional diesel engine, as shown in a graph of FIG. 6.

Also, if the ratio of the total area of only the lower nozzle holes 2 (21) with respect to the total area derived from the sum of the total area of the upper nozzle holes 3 (22) and the total area of the lower nozzle holes 2 (21) is within a region between 70-90%, it is to be noted that both of the fuel consumption and the exhaust color are maintained in good condition, as shown in FIG. 8.

FIG. 5 shows a case that the number of the lower nozzle holes 2 is eight, and that the number of the upper nozzle holes 3 is 4. However, if it is possible to set the nozzle holes so that the fuel sprays 12, 13 injected therein from the nozzle holes do not cross one another in the combustion chamber 16, there is no limitation to the number of the nozzle holes. Incidentally, in the diesel engine provided with the shallow dish type combustion chamber 16, it is preferable to set the number of the lower nozzle holes 2 to be larger than the number of the upper nozzle holes 3, because the exhaust color is maintained in good condition and at the same time the fuel consumption is reduced.

Industrial Applicability

The present invention applies to the diesel engine which has a combustion chamber in a form of a shallow dish on the top face of the piston.

**Claims**

1. A combustion system (1) for a diesel engine, the combustion system having a combustion chamber (16) which is in a form of a shallow dish on a top face of a piston, wherein the depth (H) of the shallow dish is about 10% of the diameter (D) of the opening of the combustion chamber, and a fuel injection valve comprising:

   a tip part which projects toward the combustion chamber and which is provided with a plurality of first nozzle holes (2) on a same circumference and located.in the vicinity of a lower tip; and
   a circular side wall at an opposite end of the tip part of the fuel injection valve to the lower tip and which is provided with a plurality of second nozzle holes (3),

**characterized in that**:

each of the second nozzle holes (3) has a diameter smaller than a diameter of each of the first nozzle holes (2), wherein the first nozzle holes (2) and the second nozzle holes (3) are arranged in a staggered form such that fuel sprays injected from the first nozzle holes (2) and fuel sprays injected from the second nozzle holes (3) do not cross one another in the combustion chamber (16).

2. The combustion system for the diesel engine as claimed in claim 1, wherein a top clearance (X) for allowing a valve recess not to be formed and a bore diameter of the combustion chamber on the top face (32) of the piston (29) are set such that the fuel sprays injected from the second nozzle holes (3) collide against an opening part of the combustion chamber (16) on the top face of the piston when the piston is positioned near a top dead center.

3. The combustion system for the diesel engine as claimed in claim 1 or 2, wherein the number of the first nozzle holes (2) is larger than the number of the second nozzle holes (3).

4. The combustion system for the diesel engine as claimed in claim 1, wherein a fuel valve nozzle hole angle of each of the second nozzle holes (3) is set such that the fuel sprays injected from the second nozzle holes (3) are diffused in a top clearance part after the fuel sprays collide against the piston.

5. The combustion system for the diesel engine as claimed in claim 1, wherein a nozzle hole angle of each of the first nozzle holes (2) is set such that the fuel sprays injected from the first nozzle holes (2) collide against a bottom surface of the combustion chamber (16) and such that the fuel sprays injected therefrom do not adhere to the bottom surface thereof.

6. The combustion system for the diesel engine as claimed in claim 1, wherein the first nozzle holes (2) are equally spaced on the same circumference of the fuel injection valve, and the second nozzle holes (3) are equally spaced on a same circumference of the fuel injection valve.

7. The combustion system for the diesel engine as claimed in claim 1, wherein the first nozzle holes (2) and the second nozzle holes (3) are provided such that an intersecting point (10) at which a center axis (11) of the fuel injection valve and a centerline (5) of a fuel spray injected from each of the first nozzle holes (2) intersect to each other, does not coincide with an intersecting point (9) at which the center axis of the fuel injection valve and a centerline (4) of a fuel spray injected from each of the second nozzle holes (3) intersect to each other, in order to prevent the fuel sprays injected from the first nozzle holes (2) and the fuel sprays injected from the second nozzle holes (3), from crossing one another.

**Patentansprüche**

1. Verbrennungssystem (1) für einen Dieselmotor, wobei das Verbrennungssystem eine Brennkammer (16) in Form einer flachen Vertiefung auf der Oberseite eines Kolbens aufweist, wobei die Tiefe (H) der flachen Vertiefung ungefähr 10% des Durchmessers (D) der Öffnung der Brennkammer beträgt, und ferner ein Kraftstoffeinspritzventil aufweist, mit:

einem in Richtung der Brennkammer ragenden Spitzenteil, das mit mehreren ersten Düsenlöchern (2) versehen ist, welche entlang des selben Umfangs und in der Nähe einer unteren Spitze angeordnet sind; und einer kreisförmigen Seitenwand, die an einem zu der unteren Spitze entgegengesetzten Ende des Spitzenteils des Kraftstoffeinspritzventils vorgesehen ist, und mit mehreren zweiten Düsenlöchern (3) versehen ist,

**dadurch gekennzeichnet, dass**
jedes der zweiten Düsenlöcher (3) einen Durchmesser hat, der kleiner als der Durchmesser jedes der ersten Düsenlöcher (2) ist,
wobei die ersten Düsenlöcher (2) und die zweiten Düsenlöcher (3) derart versetzt angeordnet sind, dass aus den ersten Düsenlöchern (2) gespritzte Kraftstoffstrahlen und aus den zweiten Düsenlöchern (3) gespritzte Kraftstoffstrahlen einander in der Brennkammer (16) nicht kreuzen.

**2.** Verbrennungssystem für einen Dieselmotor nach Anspruch 1, bei dem ein oberer Freiraum (X), der es ermöglicht, auf das Ausbilden von Ventilausnehmungen zu verzichten, und der Bohrungsdurchmesser der Brennkammer an der Oderseite (32) des Kolbens (29) derart gewählt sind, dass die aus den zweiten Düsenlöchern (3) gespritzten Kraftstoffstrahlen auf einen Öffnungsbereich der Brennkammer (16) auf der Oberseite des Kolbens treffen, wenn sich der Kolben nahe dem oberen Totpunkt befindet.

**3.** Verbrennungssystem für einen Dieselmotor nach Anspruch 1 oder 2, bei dem die Anzahl der ersten Düsenlöcher (2) größer als die Anzahl der zweiten Düsenlöcher (3) ist.

**4.** Verbrennungssystem für einen Dieselmotor nach Anspruch 1, bei dem der Kraftstoffventildüsenlochwinkel jedes der zweiten Düsenlöcher (3) derart gewählt ist, dass die aus den zweiten Düsenlöchern (3) gespritzten Kraftstoffstrahlen nach dem Auftreffen auf den Kolben in einem Bereich des oberen Spiels zerstäubt werden.

**5.** Verbrennungssystem für einen Dieselmotor nach Anspruch 1, bei dem der Düsenlochwinkel jedes der ersten Düsenlöcher (2) derart gewählt ist, dass die aus den ersten Düsenlöchern (2) gespritzten Kraftstoffstrahlen auf die Bodenfläche der Brennkammer (16) treffen, und derart, dass die aus diesen gespritzten Kraftstoffstrahlen nicht an der Bodenfläche derselben haften.

**6.** Verbrennungssystem für einen Dieselmotor nach Anspruch 1, bei dem die ersten Düsenlöcher (2) gleichmäßig beabstandet auf dem gleichen Umfang des Kraftstoffeinspritzventils angeordnet sind, und die zweiten Düsenlöcher (3) gleichmäßig beabstandet auf dem gleichen Umfang des Kraftstoffeinspritzventils angeordnet sind.

**7.** Verbrennungssystem für einen Dieselmotor nach Anspruch 1, bei dem die ersten Düsenlöcher (2) und die zweiten Düsenlöcher (3) derart vorgesehen sind, dass ein Schnittpunkt (10), an welchem eine Mittelachse (11) des Kraftstoffeinspritzventils und die Mittellinie (5) eines aus jedem der ersten Düsenlöcher (2) gespritzten Kraftstoffstrahls einander schneiden, nicht mit einem Schnittpunkt (9) zusammenfällt, an dem eine Mittelachse des Kraftstoffeinspritzventils und die Mittellinie (4) eines aus jedem der zweiten Düsenlöcher (3) gespritzten Kraftstoffstrahls einander schneiden, um zu verhindern, dass sich die aus den ersten Düsenlöchern (2) gespritzten Kraftstoffstrahlen und die aus den zweiten Düsenlöchern (3) gespritzten Kraftstoffstrahlen kreuzen.

**Revendications**

**1.** Système (1) de combustion pour un moteur Diesel, le système de combustion ayant une chambre de combustion (16) qui se présente sous la forme d'une cuvette peu profonde sur une face de dessus d'un piston, dans lequel la profondeur (H) de la cuvette peu profonde est égale à environ 10 % du diamètre (D) de l'ouverture de la chambre de combustion, et une soupape d'injection de carburant comportant :

une partie de bout qui fait saillie vers la chambre de combustion et qui est pourvue d'une pluralité de premiers trous (2) d'ajutage sur une même circonférence et situés au voisinage d'un bout inférieur ; et une paroi latérale circulaire à une extrémité opposée de la partie de bout de la soupape d'injection de carburant par rapport au bout inférieur et qui est pourvue d'une pluralité de seconds trous (3) d'ajutage,

**caractérisé en ce que** :

chacun des seconds trous (3) d'ajutage a un diamètre inférieur au diamètre de chacun des premiers trous (2) d'ajutage,

dans lequel les premiers trous (2) d'ajutage et les seconds trous (3) d'ajutage sont agencés sous une forme décalée de façon que des pulvérisations de carburant injectées depuis les premiers trous (2) d'ajutage et des pulvérisations de carburant injectées depuis les seconds trous (3) d'ajutage ne se croisent pas entre elles dans la chambre (16) de combustion.

**2.** Système de combustion pour un moteur Diesel selon la revendication 1, dans lequel un dégagement de dessus (X) pour permettre de ne pas former un évidement de soupape et un diamètre d'alésage de la chambre de combustion sur la face de dessus (32) du piston (29) sont établis de façon que les pulvérisations de carburant injectées depuis les seconds trous (3) d'ajutage entrent en collision avec une partie d'ouverture de la chambre (16) de combustion sur la face de dessus du piston lorsque le piston est positionné à proximité du point mort haut.

**3.** Système de combustion pour un moteur Diesel selon la revendication 1 ou 2, dans lequel le nombre des premiers trous (2) d'ajutage est supérieur au nombre des seconds trous (3) d'ajutage.

**4.** Système de combustion pour un moteur Diesel selon la revendication 1, dans lequel un angle de trou d'ajutage de soupape à carburant de chacun des seconds trous (3) d'ajutage est établi de façon que les pulvérisations de carburant injectées depuis les seconds trous (3) d'ajutage soient diffusées dans une partie de dégagement de dessus après l'entrée en collision des pulvérisations de carburant avec le piston.

**5.** Système de combustion pour un moteur Diesel selon la revendication 1, dans lequel un angle de trou d'ajutage de chacun des premiers trous (2) d'ajutage est établi de façon que les pulvérisations de carburant injectées depuis les premiers trous (2) d'ajutage entrent en collision avec une surface de fond de la chambre (16) de combustion et de manière que les pulvérisations de carburant qui en sont injectées n'adhèrent pas à la surface de fond de cette chambre.

**6.** Système de combustion pour un moteur Diesel selon la revendication 1, dans lequel les premiers trous (2) d'ajutage sont espacés de façon égale sur la même circonférence de la soupape d'injection de carburant, et les seconds trous (3) d'ajutage sont espacés de façon égale sur une même circonférence de la soupape d'injection de carburant.

**7.** Système de combustion pour un moteur Diesel selon la revendication 1, dans lequel les premiers trous (2) d'ajutage et les seconds trous (3) d'ajutage sont prévus de manière qu'un point d'intersection (10), auquel un axe central (11) de la soupape d'injection de carburant et un axe central (5) d'une pulvérisation de carburant injectée depuis chacun des premiers trous (2) d'ajutage se croisent, ne coïncide pas avec un point d'intersection (9) auquel l'axe central de la soupape d'injection de carburant et un axe central (4) d'une pulvérisation de carburant injectée depuis chacun des seconds trous (3) d'ajutage se croisent, afin d'éviter que les pulvérisations de carburant injectées depuis les premiers trous (2) d'ajutage et les pulvérisations de carburant injectées depuis les seconds trous (3) d'ajutage se croisent entre elles.

*Fig.1*

*Fig.2*

*Fig.3*

*Fig.4*

*Fig.5*

*Fig.6*

*Fig.7*

BAD ← EXHAUST COLOR → GOOD (vertical axis)

60°

SMALL ← LOWER NOZZLE HOLE ANGLE (DEGREE) → LARGE

*Fig.8*

BAD ← EXHAUST COLOR → GOOD (vertical axis)

70          90

LOWER NOZZLE HOLE AREA PERCENTAGE (%)

BAD ← FUEL CONSUMPTION → GOOD (vertical axis)

70          90

LOWER NOZZLE HOLE AREA PERCENTAGE (%)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0020735 A